# FASCICULE DE BREVET EUROPEEN

(11) **EP 4 065 435 B1**
(45) Date de publication et mention de la délivrance du brevet: **21.08.2024**
(21) Numéro de dépôt: 20803173.2
(22) Date de dépôt: 12.11.2020
(51) Int. Cl.: B60S 1/56, B60S 1/34, B60S 1/24

(54) **SYSTÈME DE NETTOYAGE D'UNE SURFACE VITRÉE D'UN VÉHICULE AUTOMOBILE**
VERFAHREN ZUR REINIGUNG EINER VERGLASTEN OBERFLÄCHE EINES KRAFTFAHRZEUGS
METHOD FOR CLEANING A GLAZED SURFACE OF A MOTOR VEHICLE

(30) Priorité: 29.11.2019 FR 1913552
(43) Date de publication de la demande: 05.10.2022
(73) Titulaire: Valeo Systèmes d'Essuyage, 78322 Le Mesnil Saint Denis (FR)
(72) Inventeur: CAILLOT, Gerald, 78322 LE MESNIL SAINT DENIS (FR); GIRAUD, Frederic, 78322 LE MESNIL SAINT DENIS (FR); JARASSON, Jean-Michel, 78322 LE MESNIL SAINT DENIS (FR); IZABEL, Vincent, 78322 LE MESNIL SAINT DENIS (FR)
(74) Mandataire: Valeo Visibility
(86) Numéro de dépôt international: PCT/EP2020/081834
(87) Numéro de publication internationale: WO 2021/104884

(56) Documents cités:
- WO-A1-2015/003705
- DE-A1- 19 850 639
- US-A1- 2007 220 697

## Description

La présente invention concerne un ensemble de détection d'un véhicule automobile, et plus particulièrement l'invention concerne un système de nettoyage associé à un capteur/émetteur d'un tel ensemble de détection.

Les véhicules, et particulièrement les véhicules automobiles, comprennent de plus en plus de systèmes automatisés, tels que des systèmes d'aide à la conduite. De tels systèmes automatisés comprennent notamment au moins un ensemble de détection qui comporte un ou plusieurs capteur(s)/émetteur(s) permettant d'acquérir des signaux révélateurs d'un environnement du véhicule et de paramètres externes à ce véhicule ainsi qu'au moins une unité de contrôle configurée pour interpréter les informations ainsi recueillies et pour prendre les décisions qui s'imposent en conséquence de ces informations.

Dès lors, on comprend qu'il est particulièrement important d'assurer le bon fonctionnement de ces capteur/émetteurs, tout au long de la vie du véhicule. Notamment, ces capteurs/émetteurs sont, le plus souvent, agencés à l'extérieur du véhicule, par exemple portés par la carrosserie, et peuvent par exemple être salis, ce qui peut rendre difficile, voire impossible, l'acquisition d'informations. Il faut donc prévoir un système de nettoyage capable de retirer efficacement les détritus, salissures, éléments organiques et autres éléments perturbateurs.

De tels systèmes de nettoyage doivent notamment être adaptés aux dimensions de la surface vitrée à nettoyer. Il est notamment problématique de prévoir des systèmes de nettoyages aptes à nettoyer correctement une surface vitrée de forme allongée, c'est-à-dire avec une dimension longitudinale plus grande que la dimension transversale correspondante. Il est alors connu de prévoir un système de nettoyage dans lequel un balai est entraîné par un moteur d'entraînement rotatif selon un mouvement de rotation autour d'un axe transversal. Il convient toutefois que la surface vitrée des capteurs/émetteurs présente une forme galbée, et non plane, afin que le balai soit bien plaqué sur la surface à nettoyer.

Ledit mouvement de rotation peut être un mouvement de rotation continue ou discontinue.

Une alternative, notamment applicable aux surfaces vitrées planes, est de prévoir un système de nettoyage dans lequel le balai d'essuyage est entraîné selon un mouvement de translation longitudinal, le long de la plus grande dimension du capteur/émetteur, afin d'en balayer la surface vitrée plane. De tels systèmes de nettoyage peuvent néanmoins s'avérer encombrants, notamment parce qu'ils nécessitent l'utilisation d'une tige déployable selon la direction de translation du balai d'essuyage.

D'autres systèmes de nettoyage sont décrits dans les documents :
WO2015/003705 A1 et DE19850639 A1.

La présente invention s'inscrit dans ce contexte et propose une alternative aux systèmes de nettoyage de capteurs/émetteurs d'ensembles de détection visant à résoudre au moins les inconvénients qui viennent d'être cités, ledit système de nettoyage pouvant être mis en oeuvre afin d'assurer le nettoyage d'une surface vitrée plane ou galbée d'un capteur/émetteur.

Un autre objectif de la présente invention est de proposer un système de nettoyage dont la performance est améliorée, notamment en réduisant le temps de débattement du système de nettoyage sur la surface vitrée à nettoyer et donc le temps nécessaire au nettoyage de ladite surface vitrée.

La présente invention vise un système de nettoyage d'une surface vitrée d'un véhicule automobile, ledit système de nettoyage comprenant au moins un balai d'essuyage et un dispositif d'entraînement d'au moins le balai d'essuyage le long d'un axe de translation sensiblement perpendiculaire audit balai d'essuyage, caractérisé en ce que la surface vitrée est une surface de détection d'un capteur/émetteur d'un ensemble de détection et en ce que le dispositif d'entraînement comprend au moins un moteur d'entraînement en rotation autour d'un axe de rotation sensiblement perpendiculaire à l'axe de translation et au moins un dispositif de transformation du mouvement de rotation du moteur d'entraînement en un mouvement rectiligne le long de l'axe de translation.

La présente invention est notamment dédiée au nettoyage de surfaces vitrées de capteurs/émetteurs, c'est-à-dire des surfaces vitrées présentant des dimensions plus réduites que celles présentées par des surfaces vitrées associées à l'habitacle du véhicule comme un pare-brise ou une lunette arrière. La surface vitrée est notamment dimensionnée en fonction de la nature du capteur/émetteur auquel elle est associée. A titre d'exemple, dans un contexte où l'ensemble de détection est un ensemble optique et le capteur/émetteur un capteur optique, la dimension longitudinale de la surface optique à nettoyer peut être de l'ordre de 300 à 400 mm et la dimension transversale, perpendiculaire à la dimension longitudinale, peut être de l'ordre de 50 à 100mm.

Le système de nettoyage tel qu'il est mis en oeuvre selon l'invention est particulièrement adapté au nettoyage de surfaces vitrées présentant une forme allongée, c'est-à-dire présentant une dimension d'allongement principale, ici correspondant à une direction longitudinale, au moins deux fois supérieure à la dimension perpendiculaire, ici transversale, de la surface vitrée.

Cette surface vitrée peut être caractérisée par une structure plane, essentiellement comprise dans un plan d'extension, ou bien présenter une structure galbée autour d'un axe longitudinal correspondant à l'axe de la plus grande dimension de la surface vitrée.

Le dispositif d'entraînement est configuré pour déplacer longitudinalement le balai d'essuyage dans une translation entre une première position extrême et une deuxième position extrême de la surface vitrée. A titre d'exemple, lesdites positions extrêmes peuvent être disposées aux abords de deux bords opposés de la surface vitrée, par exemple deux bords latéraux opposés ou deux bords longitudinaux opposées formant de façon arbitraire un bord supérieur et un bord inférieur. En d'autres termes, le dispositif d'entraînement est configuré pour permettre un mouvement de va-et-vient en translation longitudinale ente les deux positions extrêmes, sur la base d'un mouvement de rotation initié par le moteur d'entraînement rotatif. Un tel dispositif d'entraînement permet notamment de prévoir un nettoyage de surface vitrée par un mouvement de translation particulièrement adapté au nettoyage efficace de la totalité de la surface vitrée du capteur/émetteur, en utilisant un moteur rotatif standard agencé sur un bord de la surface vitrée à nettoyer.

Alternativement, les positions extrêmes peuvent délimiter une zone limitée de la surface vitrée, par exemple un champ de vision d'un capteur optique.

Selon une caractéristique de l'invention, le dispositif de transformation comporte d'une part un organe de liaison articulé sur lequel est fixé le balai d'essuyage, par l'intermédiaire d'au moins un connecteur, et d'autre part un point d'articulation moteur fixe solidaire en rotation d'un arbre de sortie du moteur d'entraînement.

Le balai d'essuyage comprend au moins une lame, destinée au nettoyage par balayage de la surface vitrée du capteur/émetteur, et au moins un support de lame, qui est fixé au dispositif de transformation par le connecteur. Notamment, ledit connecteur peut être centré sur le balai d'essuyage ou être disposé au niveau d'une extrémité axiale dudit balai d'essuyage. L'agencement du dispositif de transformation entre un organe de liaison articulé et un point d'articulation moteur fixe permet transformer un mouvement de rotation autour d'un axe passant par le point d'articulation fixe en un mouvement de translation précis non impacté par les jeux de montage du système de nettoyage.

Selon une caractéristique de l'invention, au moins une extrémité axiale du balai d'essuyage comprend au moins un organe de guidage configuré pour guider le balai d'essuyage le long de l'axe de translation de ce balai.

L'organe de guidage assure le maintien du balai d'essuyage dans une direction sensiblement perpendiculaire à l'axe de translation définissant son déplacement rectiligne de manière à prévenir le désaxement de la lame pendant le balayage de la surface vitrée.

L'organe de guidage peut, à titre d'exemple, être une patte configurée pour s'étendre parallèlement à au moins une paroi d'un boîtier du capteur/émetteur, ladite paroi portant la surface vitrée à nettoyer. Alternativement, l'organe de guidage peut être configuré pour coopérer avec le capteur/émetteur, par exemple avec une rainure comprise dans la paroi du boîtier ou dans la surface vitrée.

Selon l'invention, le dispositif de transformation comprend au moins un système de bielles et éventuellement une came.

Le système de bielles comprend une pluralité de bielles articulées les unes par rapport aux autres. Une première bielle forme, au niveau d'une première terminaison, le point d'articulation moteur fixe et est montée en rotation sur le moteur d'entraînement. Lorsque la première bielle est entraînée en rotation par le moteur d'entraînement, une deuxième terminaison, opposée à la première terminaison, définit une trajectoire circulaire.

Au moins une bielle du système de bielles, distincte de la première bielle, participe à former, à l'opposé de la première bielle, l'organe de liaison articulé reliant le balai d'essuyage au dispositif de transformation. Notamment ladite bielle peut être directement ou indirectement articulée sur la première bielle.

Dans une mise en oeuvre du dispositif de transformation avec une came, le connecteur, assurant la connexion entre le balai d'essuyage et le dispositif de transformation peut, par exemple, comprendre un pion configuré pour se déplacer le long d'une bordure périphérique de la came ou le long d'un sillon compris dans la came.

Le dispositif de transformation peut comprendre une combinaison de la came et du système de bielles, au moins une bielle du système de bielles étant raccordée au connecteur et/ou comprenant le pion configuré pour coopérer avec la came.

Selon l'invention, le système de bielles comprend au moins la première bielle, rapportée sur le moteur d'entraînement pour former le point d'articulation moteur fixe, et au moins deux quadrilatères de bielles articulés, respectivement un premier quadrilatère de bielles et un deuxième quadrilatère de bielles, au moins l'organe de liaison articulé étant commun au premier quadrilatère et au deuxième quadrilatère, le deuxième quadrilatère comprenant un point fixe du dispositif de transformation.

En d'autres termes, le système de bielles peut consister en un dispositif de Peaucellier-Lipkin assurant la transformation de la trajectoire circulaire définie par la deuxième terminaison de la première bielle en un déplacement en translation de l'organe de liaison articulé du dispositif de transformation, de manière à entraîner le balai d'essuyage le long de l'axe de translation.

Selon une caractéristique optionnelle de l'invention, le connecteur peut être disposé au niveau d'une première extrémité axiale du balai d'essuyage, le au moins un organe de guidage étant disposé au niveau d'une deuxième extrémité axiale, opposée à la première extrémité axiale, dudit balai d'essuyage.

Par « première extrémité axiale » on entend ici l'extrémité du balai d'essuyage la plus proche de l'axe de rotation du moteur d'entraînement. Il en résulte que la « deuxième extrémité axiale » est une extrémité distale du balai d'essuyage par rapport à l'axe de rotation.

Selon une caractéristique optionnelle de l'invention, le connecteur peut être centré sur le balai d'essuyage, c'est-à-dire que le connecteur est équidistant de la première extrémité axiale et de la deuxième extrémité axiale du balai.

L'alternative selon laquelle le connecteur est centré est particulièrement adaptée à des ensembles de nettoyage dans lequel le balai présente une dimension axiale importante, sensiblement de l'ordre de la plus grande dimension de la surface vitrée à nettoyer. Par exemple, un tel mode de réalisation peut être mis en oeuvre pour assurer le balayage de la surface vitrée perpendiculairement à une dimension la plus longue de ladite surface vitrée. En d'autres termes, le balai d'essuyage s'étend sur la dimension la plus longue de la surface vitrée, réduisant ainsi avantageusement le temps de débattement du système de nettoyage sur la surface vitrée et donc le temps nécessaire au nettoyage de ladite surface vitrée.

Avantageusement, lorsque le système de nettoyage selon la présente invention une telle alternative, celui-ci présente, préférentiellement, le moyen de guidage au niveau de chacune de ses extrémités longitudinales.

Selon une caractéristique de l'invention, indépendamment du mode de réalisation mis en oeuvre, le balai d'essuyage peut comprendre au moins un dispositif d'alimentation en fluide de nettoyage et au moins un dispositif de projection dudit fluide de nettoyage sur au moins la surface vitrée du capteur/émetteur.

A titre d'exemple, le dispositif d'alimentation peut consister en au moins une canule tandis que le dispositif de projection du fluide de nettoyage peut consister en au moins un conduit aménagé dans le support de lame et en une pluralité de buses débouchant dans ledit conduit. Le fluide de nettoyage est alors amené dans le système de nettoyage par le dispositif d'alimentation, puis il circule dans le conduit du dispositif de projection avant d'être projeté à travers les buses, vers la surface vitrée à nettoyer.

Selon une caractéristique de l'invention, le dispositif de transformation peut comprendre au moins un organe de contrôle du dispositif d'alimentation et du dispositif de projection du fluide de nettoyage.

L'organe de contrôle peut consister en un contacteur et un interrupteur « on-off » permettant, lorsque l'organe de contrôle est actionné une première fois, l'alimentation du système de nettoyage en fluide de nettoyage, et, lorsque l'organe de contrôle est actionné une deuxième fois, l'interruption de la circulation, et donc de la projection, du fluide de nettoyage.

A titre d'exemple, l'organe de contrôle peut être porté par l'une des bielles du système de bielles et l'organe de contrôle peut être actionné par une bielle adjacente, par exemple articulée sur cette même bielle.

Alternativement, l'organe de contrôle peut être porté par le connecteur et la came peut comprendre au moins un organe d'activation, par exemple un doigt, s'étendant en saillie de ladite came et configuré pour actionner l'organe de contrôle.

L'invention concerne également un ensemble de détection pour véhicule automobile comprenant au moins le capteur/émetteur, comportant au moins la surface vitrée, et au moins le système de nettoyage tel que précédemment exposé.

Selon une caractéristique de l'invention, une dimension principale d'une lame du balai d'essuyage est sensiblement égale à l'une des dimensions, longitudinale ou transversale, de la surface vitrée à nettoyer.

Notamment, le support de lame du balai d'essuyage peut présenter une dimension principale sensiblement supérieure à la dimension longitudinale de la lame. Alternativement, la lame du balai d'essuyage peut présenter une longueur sensiblement inférieure à la dimension longitudinale ou transversale de la surface vitrée. De la sorte, le balayage assuré par le balai d'essuyage peut être limité au champ de vision du capteur/émetteur, c'est-à-dire à une portion fonctionnelle de la surface vitrée.

Selon l'invention, la surface vitrée peut être galbée, la surface vitrée étant définie par au moins une directrice et une génératrice, l'axe de translation du balai d'essuyage s'étendant parallèlement à au moins la génératrice de la surface vitrée du capteur/émetteur.

Autrement dit, le balai d'essuyage, sensiblement perpendiculaire à l'axe de translation, s'étend perpendiculairement à au moins la génératrice de la surface vitrée.

Par « galbée », on entend que la surface vitrée constitue une portion de cylindre définie par la directrice et la génératrice.

Avantageusement, le balai d'essuyage peut présenter une courbure configurée pour épouser le galbe de la surface vitrée.

Selon une caractéristique de l'invention, lorsque le capteur/émetteur comprend une surface vitrée galbée, le système de nettoyage peut être configuré de sorte que disposé de sorte que le dispositif de transformation est essentiellement compris dans un plan principal perpendiculaire ou parallèle à la génératrice participant à définir la surface vitrée.

Selon une caractéristique de l'invention, lorsque le capteur/émetteur comprend une surface vitrée plane, le plan principal comprenant le dispositif de transformation peut s'étendre parallèlement ou perpendiculairement au plan d'extension de la surface vitrée.

En d'autres termes, le dispositif de transformation peut s'étendre perpendiculairement à au moins l'une des parois du boîtier du capteur/émetteur, notamment une paroi latérale, une paroi supérieure ou une portion inférieure.

Selon une caractéristique de l'invention, le boîtier peut comprendre au moins une lumière configurée pour laisser passer le dispositif d'entraînement du système d'essuyage, c'est-à-dire le dispositif de transformation ou le moteur d'entraînement ou un organe de raccordement reliant les reliant l'un à l'autre. A titre d'exemple, la lumière peut être aménagée dans l'une des parois latérales, dans la portion inférieure ou dans la paroi supérieure dudit boîtier, la lumière étant configurée pour accommoder le déplacement du dispositif d'entraînement entre la première position extrême et la deuxième position extrême.

D'autres caractéristiques, détails et avantages de l'invention ressortiront plus clairement à la lecture de la description donnée ci-après à titre indicatif en relation avec des dessins dans lesquels :
[Fig 1] est une vue de face d'un véhicule automobile comprenant un ensemble de détection selon l'invention ;
[Fig 2] est une vue en perspective schématique de l'ensemble de détection dans lequel un système de nettoyage s'étend perpendiculairement à la direction longitudinale ;
[Fig 3] est une vue en perspective schématique d'un agencement alternatif de l'ensemble de détection ;
[Fig 4] est une représentation schématique du système de nettoyage comprenant un dispositif de transformation d'un mouvement de rotation en un mouvement rectiligne consistant en un système de bielles ;
[Fig 5] est une représentation schématique du système de nettoyage selon l'invention, dans lequel le dispositif de transformation est un système de bielles consistant en un dispositif de Peaucellier-Lipkin représenté dans une première position extrême ;
[Fig 6] est une représentation schématique du système de nettoyage illustré à la figure 5, lorsque le dispositif de transformation est dans une position intermédiaire ;
[Fig 7] est une représentation schématique du système de nettoyage illustré aux figure 5 et 6, lorsque le dispositif de transformation est dans une deuxième position extrême, opposée à la première position extrême illustrée dans la figure 5 ;
[Fig 8] est une représentation schématique du système de nettoyage réalisé selon une alternative du système tel qu'illustré dans les figures 4 à 7 ;
[Fig 9] est une représentation schématique du système de nettoyage réalisé selon une alternative du système tel qu'illustré dans les figures 4 à 8 ;
[Fig 10] est une représentation schématique du système de nettoyage réalisé selon un autre exemple.

Il faut tout d'abord noter que les figures exposent l'invention de manière détaillée pour mettre en oeuvre l'invention, lesdites figures pouvant bien entendu servir à mieux définir l'invention le cas échéant.

Dans la suite de la description, la dénomination « longitudinale », représentée par le repère Ox, se réfère à l'orientation d'une dimension la plus longue de la surface vitrée à nettoyer de l'ensemble de détection selon l'invention, comprise entre deux bords latéraux, tandis que la dénomination « transversale », représentée par le repère Oy, se réfère à une direction perpendiculaire à la direction longitudinale et s'étendant entre un bord supérieur et un bord inférieur de ladite surface vitrée.

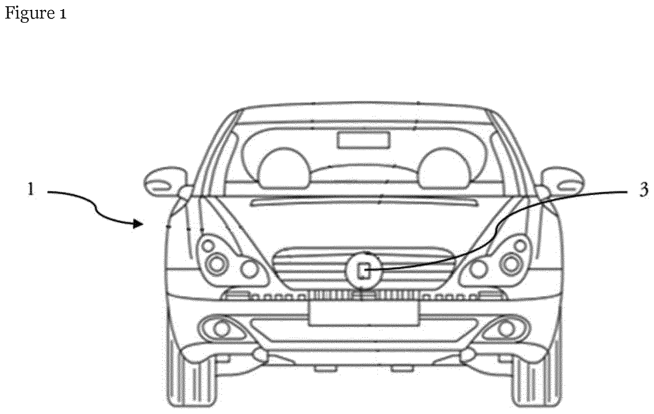

La figure 1 représente un véhicule automobile 1 comprenant un ensemble de détection 3, ici agencé dans une calandre du véhicule, mais qui pourrait sans sortir du contexte de l'invention être agencé en face avant, arrière, et/ou latérale de ce véhicule automobile 1.

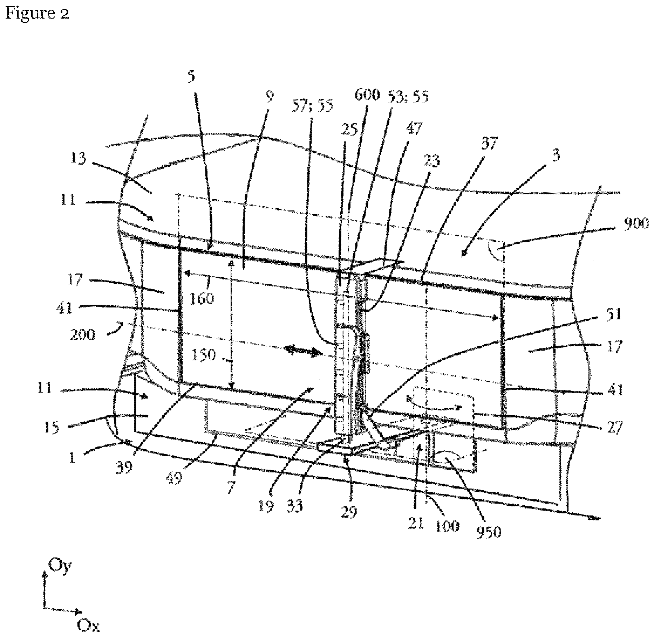

L'ensemble de détection 3 est plus particulièrement rendu visible dans la figure 2.

L'ensemble de détection 3 comprend au moins un capteur/émetteur 5 et un système de nettoyage 7, configuré pour balayer une surface vitrée 9 dudit capteur/émetteur 5. On entend par « capteur/émetteur 5 », un organe configuré pour acquérir des données relatives à un environnement extérieur au véhicule automobile 1 et pour transmettre les données ainsi acquises à une unité de contrôle, tout type de détection pouvant être mis en oeuvre dans ce contexte.

A titre d'exemple, le capteur/émetteur 5 représenté peut être un système RADAR, de l'acronyme anglo-saxon « RAdio Détection And Ranging », émettant des ondes radioélectriques, ou bien un système LIDAR, de l'acronyme anglo-saxon « LIght Détection And Ranging », émettant des ondes lumineuses, par exemple un faisceau laser.

L'unité de contrôle est configurée pour envoyer, en conséquence de ces informations reçues en provenance du capteur/émetteur 5, une ou plusieurs instructions permettant d'enclencher ou d'assister une manoeuvre du véhicule automobile.

Dans ce qui va suivre, le capteur/émetteur présentant une surface vitrée à nettoyer sera décrit comme un capteur optique dont la surface optique est à nettoyer par le système d'essuyage selon l'invention. On comprend que ceci n'est pas limitatif et que tout type de capteur/émetteur, et par exemple un capteur susceptible d'émettre et recevoir des ondes lumineuses ou électromagnétiques, est compris dans l'invention.

Le capteur optique 5 comprend un boîtier 11 porteur de la surface optique 9, la surface optique 9 étant maintenue par au moins deux parois du boîtier 11. Dans l'exemple illustré, la surface optique 9 s'étend entre une paroi supérieure 13, une portion inférieure 15 et deux parois latérales 17 du boîtier 11, la surface optique 9 étant tournée vers la chaussée.

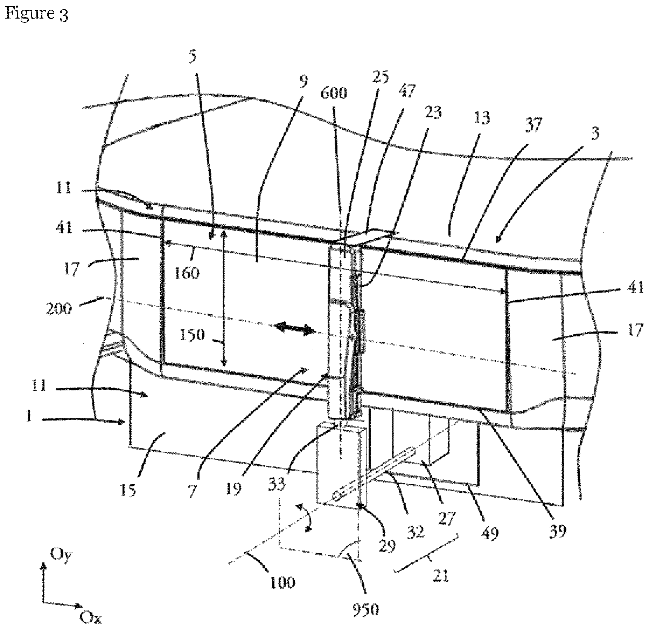

Il est notable, tel qu'illustré sur les figures 2 ou 3 par exemple, que la surface vitrée associée au système de nettoyage selon l'invention présente une forme allongée, c'est-à-dire présentant une dimension d'allongement principale, ici correspondant à une direction longitudinale, parallèle à la direction de déplacement du balai du système de nettoyage le long de la surface vitrée. A titre d'exemple non limitatif, la dimension d'allongement principale longitudinale, ou dimension longitudinale, de la surface vitrée est au moins égale au double de la dimension transversale, ou hauteur, de cette surface vitrée. A titre d'exemple, la dimension longitudinale peut être d'environ 300 mm et la hauteur peut être d'environ 100mm.

La surface optique 9 peut, telle que représentée, être plane, celle-ci étant alors essentiellement comprise dans un plan d'extension 900.

Selon l'invention et tel qu'exposé ci-après, la surface optique 9 peut également être galbée autour d'un axe longitudinal, c'est-à-dire un axe parallèle à la plus grande dimension de la surface optique et la direction de déplacement en translation du système de nettoyage. Avantageusement, le balai d'essuyage peut être sensiblement incurvé de sorte à assurer un essuyage optimal de la surface optique 9.

Le capteur optique 5 doit pouvoir fonctionner de façon optimale en toutes circonstances. Afin d'optimiser l'acquisition d'images par le capteur optique 5, il est nécessaire de prévenir l'accumulation de particules et saletés sur la surface optique 9. A cette fin, le système de nettoyage 7 de l'ensemble de détection 3 est configuré pour effectuer le balayage d'au moins une portion de la surface optique 9, par exemple son champ de vision, voire de l'intégralité de ladite surface optique 9.

Le système de nettoyage 7 comprend au moins un balai d'essuyage 19 monté mobile par rapport à la surface optique 9 et un dispositif d'entraînement 21.

Le balai d'essuyage 19 comprend une lame 23, effectivement plaquée contre la surface optique 9 afin d'en assurer le balayage, et un support de lame 25, porteur de ladite lame 23.

Le dispositif d'entraînement 21 est composé d'un moteur d'entraînement rotatif 27, représenté sur la figure 2 de façon schématique par des traits pointillés, et configuré pour entraîner un arbre de sortie 32 autour d'un axe de rotation 100, et d'un dispositif de transformation 29 du mouvement de rotation du moteur d'entraînement 27 en un mouvement rectiligne le long de l'axe principal d'allongement de la surface vitrée, ici la direction longitudinale. Ledit mouvement de rotation peut être un mouvement de rotation continue ou discontinue.

Le dispositif de transformation 29 comporte un organe de liaison articulé 31 sur lequel est fixé le balai d'essuyage 19 et ce dispositif de transformation 29 est relié à l'arbre de sortie 32, au niveau d'un point d'articulation moteur fixe 35. Par « point d'articulation moteur fixe » on entend un point de liaison par lequel le mouvement du moteur est transmis au dispositif de transformation et dont la position dans l'espace, notamment relativement à l'agencement de la surface vitrée, demeure sensiblement identique tout au long du mouvement du dispositif de transformation 29.

Tel que cela sera décrit plus en détails ci-après, le dispositif de transformation 29, interposé entre le balai d'essuyage 19 et le moteur d'entraînement 27, est configuré de telle sorte que le balai d'essuyage est entraîné, sous l'effet de la rotation du moteur d'entraînement 27, selon un mouvement rectiligne le long d'un axe de translation 200, entre la première position extrême et la deuxième position extrême par rapport à la surface optique 9.

Le dispositif de transformation 29, ici schématiquement représenté sous la forme d'un parallélogramme, peut consister en un système de bielles et/ou en au moins une came, différents modes de réalisation et agencements dudit dispositif de transformation 29 étant davantage détaillés ci-après.

Dans les figures 2 et 3, la surface optique 9 est plane et le balai d'essuyage 19 présente une structure sensiblement rectiligne. Le balai d'essuyage 19 s'étend parallèlement au plan d'extension 900, la lame 23 du balai d'essuyage 19 étant en contact avec la surface optique 9 de manière à pouvoir la racler lors du déplacement du système de nettoyage 7.

Le balai d'essuyage 19 s'étend selon une direction définie par une droite d'extension 600, perpendiculaire à l'axe de translation 200. Le balai d'essuyage peut être disposé de sorte que la droite d'extension s'étende parallèlement à la direction transversale Oy et à une dimension la plus courte de la surface optique 9, comprise entre un bord supérieur 37 et un bord inférieur 39 de la surface optique 9.

Alternativement, et tel que cela sera exposé plus en détails ci-après, le balai d'essuyage 19 peut être monté de sorte que la droite d'extension 600 s'étende parallèlement audit bord supérieur 37 ou bord inférieur 39, c'est-à-dire parallèlement à la direction longitudinale Ox ou à la dimension la plus longue de la surface optique 9.

La disposition du balai d'essuyage 19 relativement à la surface optique 9 peut notamment être dépendante de la structure de ladite surface optique 9. En effet, pour un surface optique plane, le balai d'essuyage peut être disposé parallèlement à la direction longitudinale Ox ou à la direction transversale Oy. En revanche, lorsque la surface optique 9 est galbée, l'orientation du balai d'essuyage 19 sera dépendante de l'orientation du galbe de la surface optique 9, tel que cela sera détaillé ci-après.

Il résulte de tels agencements que, selon le mode de réalisation mis en oeuvre, soit le déplacement rectiligne du balai d'essuyage 19 peut être réalisé sur une dimension transversale 150 de la surface optique 9, comprise entre le bord supérieur 37 et le bord inférieur 39, de sorte que l'axe de translation 200 s'étende parallèlement à la direction transversale, soit le déplacement du balai peut se faire sur une dimension longitudinale 160 de la surface optique 9, consistant en la dimension la plus longue de la surface optique 9 comprise entre deux bords latéraux 41, parallèlement à la direction longitudinale, conformément à la figure 3. Il est entendu que le balai d'essuyage 19 est apte à se déplacer selon deux sens opposés le long de l'axe de translation 200.

Dans l'exemple illustré, le balai d'essuyage 19 est relié au dispositif d'entraînement 21, et plus particulièrement à l'organe de liaison articulé 31, par un connecteur 33, lequel est fixé sur une première extrémité axiale 43 du balai d'essuyage 19 tandis qu'une deuxième extrémité axiale 45, opposée à la première extrémité axiale 43, comprend un organe de guidage 47.

L'organe de guidage 47 présente ici la forme d'une languette ou d'une patte qui s'étend vers la surface optique 9 afin d'assurer que, lors du déplacement rectiligne du balai d'essuyage 19 le long de l'axe de translation 200, le balai d'essuyage 19 demeure sensiblement perpendiculaire audit axe de translation 200. Avantageusement, le balai d'essuyage 19 peut comprendre une pluralité d'organes de guidage 47, respectivement équipés sur la première extrémité axiale 43 et la deuxième extrémité axiale 45.

La figure 2 représente plus particulièrement un premier exemple de réalisation du système de nettoyage 7 au sein duquel le dispositif de transformation 29 est essentiellement compris dans un plan principal 950 perpendiculaire à l'agencement transversal du balai d'essuyage 19. Le dispositif de transformation 29 s'étend partiellement dans le boîtier 11 et partiellement à l'extérieur du capteur optique 5.

Ainsi, afin de permettre le déplacement du dispositif de transformation 29 entre la première position extrême du système de nettoyage et la deuxième position extrême, le boîtier 11, ici sa portion inférieure 15, comprend une lumière 49 en travers de laquelle s'étend le dispositif de transformation 29.

Alternativement, l'agencement du système de nettoyage 7 par rapport au capteur peut être inversé de sorte que le dispositif de transformation 29 s'étende en regard de la paroi supérieure 13, cette dernière comprenant la lumière 49.

Selon une autre alternative, et tel qu'exposé ci-après, le système de nettoyage peut être aménagé de sorte que le dispositif de transformation 29 soit disposé en regard de l'un des bords latéraux 41 de la surface optique 9. Dans un tel système optique, la lumière 49 sera aménagée au niveau de la paroi latérale 17 correspondante du boîtier 11.

Additionnellement, selon l'exemple illustré sur la figure 2, le système de nettoyage 7 peut être configuré pour projeter un fluide de nettoyage sur la surface optique 9. A cette fin, le système de nettoyage 7 peut comprendre au moins un dispositif d'alimentation 51 du balai d'essuyage 19 en fluide de nettoyage, par exemple au moins une canule, ainsi qu'au moins un dispositif de projection 53 du fluide de nettoyage embarqué sur le balai d'essuyage et assurant la pulvérisation du fluide de nettoyage sur la surface optique 9.

Par exemple, le dispositif de projection 53 peut comporter au moins un conduit 55, aménagé le long du balai dans le support de lame 25 et fluidiquement relié au dispositif d'alimentation 51 du système de nettoyage 7, et au moins une buse 57 portée par le support de lame en étant tournée vers la surface optique 9 et en débouchant dans ledit conduit 55. Avantageusement, une pluralité de buses 57 peut être répartie le long du support de lame 25. Le fluide de nettoyage est ainsi, selon l'exemple illustré, injecté dans le dispositif d'alimentation 51 puis circule dans le conduit 55 du dispositif de projection 53 avant d'être pulvérisé vers la surface optique 9 en passant à travers les buses 57.

La figure 3 représente plus particulièrement un second exemple de réalisation du système de nettoyage 7, sensiblement identique à celui précédemment exposé, mais au sein duquel le dispositif de transformation 29 s'étend essentiellement dans un plan principal 950 sensiblement parallèle à la droite d'extension 600 du balai d'essuyage 19 et à la direction transversale Oy, correspondant ici à la dimension la plus courte de la surface optique 9.

Dans un tel ensemble optique 3, la portion inférieure 15 du boîtier comprend également une lumière 49, configurée pour laisser passer le moteur d'entraînement 27. Ladite lumière 49 présente ici des dimensions plus réduites que celle illustrée dans la figure 2 puisqu'elle est configurée pour laisser passer uniquement l'arbre de sortie 32 du moteur d'entraînement, connecté au dispositif de transformation 29, transmettant un déplacement en rotation autour de l'axe de rotation 100 au dispositif de transformation 29, un tel déplacement n'impliquant pas une altération de la position du moteur d'entraînement 27 le long des directions longitudinale Ox et/ou transversale Oy.

Tel que précédemment exposé, l'agencement du système de nettoyage 7 par rapport au capteur optique peut être modifié de sorte que le dispositif de transformation 29 s'étende en regard de la paroi supérieure 13, cette dernière comprenant la lumière 49, ou en regard de l'une des parois latérales 17 du boîtier 11.

Il est à noter que, si les figures 2 et 3 représentent des ensembles optiques dans lesquels le capteur optique 5 comprend une surface optique 9 plane, les caractéristiques relatives à la présente invention exposées ci-dessus peuvent également être appliquées à une surface optique 9 galbée, les spécificités relatives à l'agencement du balai d'essuyage par rapport à ladite surface optique galbée étant davantage détaillées ci-après.

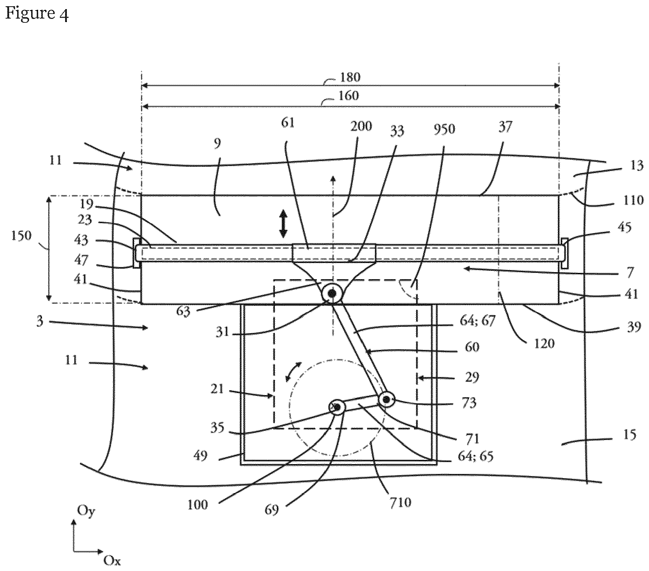

Les figures 4 à 10 illustrent différents modes de réalisations et alternatives du dispositif de transformation 29. A des fins de clarté, les dispositifs de transformation 29 représentés sont disposés de sorte que le plan principal 950 les comprenant s'étende sensiblement parallèlement à la surface à nettoyer, et donc à la direction transversale et à la direction longitudinale tel que décrit pour la figure 3. Il est néanmoins entendu que, pour l'ensemble des modes de réalisation décrits ci-après, le dispositif de transformation 29 peut être disposé de sorte que le plan principal 950 le comprenant s'étende perpendiculairement à la surface vitrée, tel que précédemment décrit pour la figure 2.

Également, dans l'ensemble des figures ci-après, la surface optique 9 présente une structure galbée dont la courbure est schématiquement définie par une directrice 110, prolongée par des lignes pointillées. De telles figures n'ont en rien un caractère limitatif et ont pour vocation la clarification de l'agencement relatif du balai d'essuyage 19 par rapport au galbe et aux génératrices 120 desdites surfaces optiques galbées. L'ensemble optique 3 peut néanmoins, tel qu'exposé précédemment, comprendre une surface optique 9 plane sans que l'agencement de l'ensemble optique 3 ne s'en retrouve altéré.

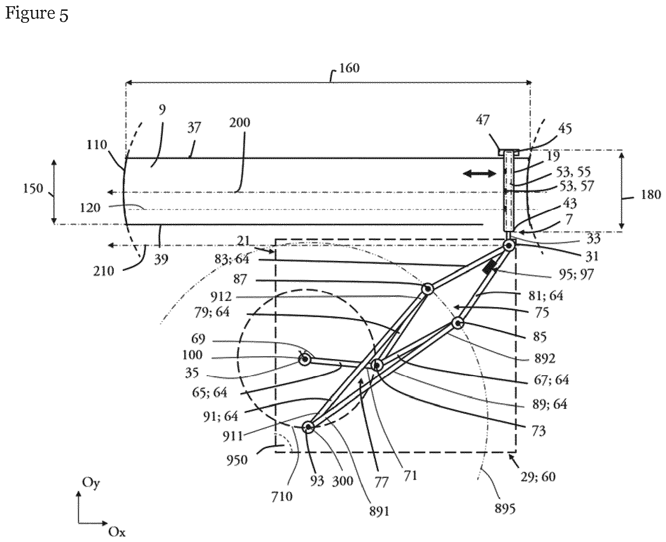

Les figures 4 à 9 illustrent différents exemples dans lequel le dispositif de transformation 29 comprend un système de bielles 60. La figure 4 représente un exemple d'architecture simple du système de bielles 60 tandis que les figures 5 à 9 représentent différents modes de réalisation du système de nettoyage 7 lorsque celui-ci comprend un système de bielles 60 de type dispositif de Peaucellier-Lipkin.

L'ensemble optique 3 représenté à la figure 4 présente une surface optique 9 galbée dont la forme surfacique est définie par une directrice 110 courbée autour d'un axe transversal et une génératrice 120 s'étendant perpendiculairement à cette directrice en étant sensiblement parallèle à la direction transversale Oy.

Au sein du système de nettoyage 7, le balai d'essuyage 19 est disposé de manière à s'étendre perpendiculairement à la génératrice 120 de la surface optique 9, le balai d'essuyage 19 étant déplacé selon une trajectoire rectiligne le long de l'axe de translation 200, sensiblement parallèle à ladite génératrice 120. Il est à noter qu'un tel agencement relatif du balai d'essuyage 19 et de la génératrice de la surface optique 9 est reproduit pour les différents modes de réalisation de la présente invention mettant en oeuvre une surface optique galbée.

La lame 23 du balai d'essuyage 19, ici schématiquement représentée en pointillés, est caractérisé par une longueur 180, mesurée le long de la droite d'extension 600 du balai d'essuyage 19, et sensiblement égale à la dimension longitudinale 160 de la surface optique 9, mesurée entre ses deux bords latéraux 41.

Alternativement, la lame 23 du balai d'essuyage peut présenter une longueur 180 inférieure à la dimension longitudinale 160 de la surface optique 9, de manière à limiter le balayage à un portion de ladite surface optique 9.

Dans l'exemple illustré, le balai d'essuyage 19 est relié au dispositif de transformation 29 par le connecteur 33, lequel est centré sur le support de lame 25. Autrement dit, le connecteur 33 est équidistant de la première extrémité axiale 43 et de la deuxième extrémité axiale 45 du balai d'essuyage 19. Il est à noter que le connecteur 33 est ici schématiquement représenté et illustre un exemple de réalisation dudit connecteur 33, sa structure n'étant en rien limitative. Le connecteur 33 comprend au moins un organe de fixation 61 du connecteur 33 sur le support de lame 25, par exemple une pluralité de griffes ou un organe de clippage, et au moins un moyen de connexion 63 du connecteur 33 sur au moins une bielle 64 du système de bielles 60, le moyen de connexion 63, consistant par exemple en un orifice ou en un système de pivot, formant partie de l'organe de liaison articulé 31 du système de nettoyage.

Le balai d'essuyage 19 illustré à la figure 4 comprend deux organes de guidage 47 s'étendant de part et d'autre de la surface optique 9, en regard des bords latéraux 41. Les organes de guidage 47 sont destinés à assurer la stabilité du balai d'essuyage 19 et la linéarité de son déplacement en translation entre la première position extrême et la deuxième position extrême le long de l'axe de translation 200 de sorte que le balai d'essuyage 19 demeure sensiblement perpendiculaire à la génératrice 120 de la surface optique 9. Les organes de guidage peuvent notamment consister en un coulisseau logé dans un rail formé de façon approprié sur le boîtier au niveau des bords latéraux 41.

Alternativement, il pourra néanmoins être envisagé d'aménager le connecteur 33 au niveau d'une extrémité du balai d'essuyage 19, tel qu'illustré ci-après pour d'autres exemples de réalisation, et de prévoir un unique organe de guidage 47 à l'extrémité opposée du balai d'essuyage 19.

Le déplacement du balai d'essuyage 19 est assuré par le dispositif d'entraînement 21 comprenant le dispositif de transformation 29, ici le système de bielles 60, et le moteur d'entraînement, non représenté. Notamment, et tel que précédemment exposé, le raccordement entre ledit moteur d'entraînement et le dispositif de transformation 29 est réalisé au niveau de la lumière 49 comprise dans la portion inférieure 15 du boîtier 11.

En l'espèce, le système de bielles 60 comprend deux bielles 64, appelées première bielle 65 et deuxième bielle 67. Le dispositif de transformation 29 est ici essentiellement compris dans le plan principal 950, lequel s'étend parallèlement à l'axe de translation 200 et à la génératrice 120 de la surface optique 9 ainsi que perpendiculairement à l'axe de rotation 100 du moteur d'entraînement 27.

La première bielle 65 est liée à l'arbre de sortie du moteur d'entraînement, une première terminaison 69 de la première bielle 65 formant le point d'articulation moteur fixe 35. Par « point d'articulation moteur fixe 35 » on entend que la première terminaison 69 de la première bielle 65 est disposée dans le prolongement axial de l'arbre de sortie du moteur d'entraînement et n'est donc pas déplacée dans l'espace le long des directions longitudinale Ox et/ou transversale Oy.

La première bielle 65 est ainsi entraînée en rotation autour de l'axe de rotation 100 et elle présente une deuxième terminaison 71, opposée à la première terminaison 69, qui est ainsi déplacée selon une trajectoire en arc de cercle le long du premier cercle 710, centré sur l'axe de rotation 100, lorsque le moteur d'entraînement 27 fonctionne.

La deuxième bielle 67 est articulée sur la première bielle 65, la première bielle 65 et la deuxième bielle 67 étant reliée au niveau d'un premier pivot 73. La deuxième bielle 67 est également reliée au connecteur 33 de manière à porter le balai d'essuyage 19, la connexion entre ledit connecteur 33 et la deuxième bielle 67 formant l'organe de liaison articulé 31 du système de nettoyage.

Ainsi, lorsque le moteur d'entraînement est activé, la première bielle 65 est entraînée en rotation, la deuxième terminaison 71 de la première bielle 65, et donc le premier pivot 73, se déplaçant alors le long du premier cercle 710. Il en résulte un déplacement de la deuxième bielle 67 et, le balai étant guidé en translation par les organes de guidage 47, ce déplacement génère une poussée ou une traction sur le connecteur et donc un déplacement du balai d'essuyage selon une trajectoire rectiligne le long de l'axe de translation 200, entre la première position extrême et la deuxième position extrême, parallèlement à la génératrice 120 de la surface optique 9.

Les dimensions des bielles impactent sur la course transversale du balai d'essuyage et ces dimensions sont prévues pour que les positions extrêmes du balai puissent correspondre aux abords du bord supérieur 37 et du bord inférieur 39 de la surface optique 9, de sorte que le balai d'essuyage 19 se déplace sur l'intégralité de la dimension transversale 150 de la surface optique 9.

Alternativement, le système de nettoyage 7 peut être configuré, notamment par un dimensionnement particulier des bielles ou par des moyens de butée bloquant la rotation de la première bielle 65, pour balayer une portion limitée de la dimension transversale 150 de la surface optique 9, l'espacement entre la première position extrême et la deuxième position extrême ainsi que l'amplitude du déplacement du balai d'essuyage 19 étant alors plus réduits.

Un tel système de bielles 60 présente l'avantage d'une mise en oeuvre simple, peu encombrante et peu coûteuse. Les exemples de réalisation présentés ci-après mettent en oeuvre un système de bielles 60 de type dispositif de Peaucellier-Lipkin, plus complexe, conférant avantageusement une plus grande stabilité du dispositif de transformation 29 et donc une linéarité optimisée du déplacement rectiligne du balai d'essuyage 19 le long de l'axe de translation 200.

Particulièrement, les exemples de mise en oeuvre de la présente invention exposée ci-après illustrent l'agencement relatif de la surface optique 9 et du système d'essuyage 7, sans le boîtier du capteur optique. Il est néanmoins entendu que les caractéristiques précédemment exposées relatives audit boîtier, tel que la présence de la lumière permettant la liaison mécanique entre moteur d'entraînement et dispositif de transformation, s'étendent aux différentes alternatives exposées ci-dessous.

De manière générale, le dispositif de transformation 29 tel qu'illustré aux figures 5 à 9 comporte un système de bielles 60 avec une pluralité de bielles 64, essentiellement compris dans le plan principal 950, sensiblement parallèle à la génératrice 120 de la surface optique et à la direction transversale Oy.

L'une des bielles 64 du système de bielles 60, qualifiée de première bielle 65, présente des caractéristiques similaires à celles précédemment exposées, c'est-à-dire que ladite première bielle 65 est rapportée et montée pivotante sur le moteur d'entraînement 27 pour former le point d'articulation moteur fixe 35, la première terminaison 69 de la première bielle 65 étant dans le prolongement de l'arbre sortie et de l'axe de rotation 100, sensiblement perpendiculaire à la génératrice 120 de la surface optique 9, de sorte que la deuxième terminaison 71 de la première bielle 65 est déplacée le long du premier cercle 710 centré sur l'axe de rotation 100.

Le système de bielles 60 comprend en outre au moins deux quadrilatères articulés, respectivement un premier quadrilatère 75 et un deuxième quadrilatère 77 de bielles 64, au moins l'organe de liaison articulé 31 étant formé conjointement par le premier quadrilatère 75 et par le deuxième quadrilatère 77.

Le premier quadrilatère 75 est un losange formé par la deuxième bielle 67, une troisième bielle 79, une quatrième bielle 81 et une cinquième bielle 83 toutes de dimensions identiques. La deuxième bielle 67 et la troisième bielle 79 sont articulées sur la deuxième terminaison 71 de la première bielle 65, pour former le premier pivot 73 précédemment évoqué. De même, la deuxième bielle 67 et la quatrième bielle 81 sont liées de manière à former un deuxième pivot 85 tandis que la troisième bielle 79 et la cinquième bielle 83 sont liées de manière à former un troisième pivot 87.

La quatrième bielle 81 et la cinquième bielle 83 sont reliées au connecteur 33 pour former l'organe de liaison articulé 31 reliant le dispositif de transformation 29 au balai d'essuyage 19. Le premier quadrilatère 75 de bielles 64 s'étend ainsi entre la première bielle 65, au niveau du premier pivot 73, et le balai d'essuyage, au niveau de l'organe de liaison articulé 31.

Le deuxième quadrilatère 77 de bielles 64 comprend une sixième bielle 89 et une septième bielle 91, ainsi que la quatrième bielle 81 et la cinquième bielle 83 précédemment évoquées. En d'autres termes, la quatrième bielle 81 et la cinquième bielle 83 sont communes au premier quadrilatère 75 et au deuxième quadrilatère 77 du système de bielles 60. Il en va de même pour l'organe de liaison articulé 31 reliant la quatrième bielle 81 et la cinquième bielle 83. La sixième bielle 89 est reliée à la quatrième bielle 81 au niveau du deuxième pivot 85 et la septième bielle 91 est reliée à la cinquième bielle 83 au niveau du troisième pivot 87.

Notamment, la sixième bielle 89 et la septième bielle 91 présentent des dimensions sensiblement identiques et qui sont supérieures aux dimensions de la quatrième bielle 81 et de la cinquième bielle 83, tandis que les bielles du premier quadrilatère 75 présentent toutes ici une dimension identique.

La sixième bielle 89 et la septième bielle 91 sont montées pivotantes autour d'un point fixe commun 93 du dispositif de transformation 29. En d'autres termes, une première extrémité de la sixième bielle 891 et une première extrémité de la septième bielle 911 sont montées pivotantes autour d'un axe de pivotement 300 sensiblement parallèle à l'axe de rotation 100 du moteur d'entraînement 27 et sensiblement perpendiculaire à la direction longitudinale Ox et à la direction transversale Oy, lesdites extrémités n'étant pas déplacées dans l'espace par rapport aux directions longitudinale Ox et transversale Oy. Des extrémités opposées, respectivement une deuxième extrémité de la sixième bielle 892 et une deuxième extrémité de la septième bielle 912 correspondant chacune avec le deuxième pivot 85 et le troisième pivot 87, sont entraînées le long d'une trajectoire en arc de cercle définie par un deuxième cercle 895 centré sur l'axe de pivotement 300.

Il est à noter que le point fixe 93 est disposé sur le premier cercle 710 définissant la trajectoire de la deuxième terminaison 71 de la première bielle 65. Également, le deuxième quadrilatère 77 de bielles 64 n'est pas directement relié à la première bielle 65.

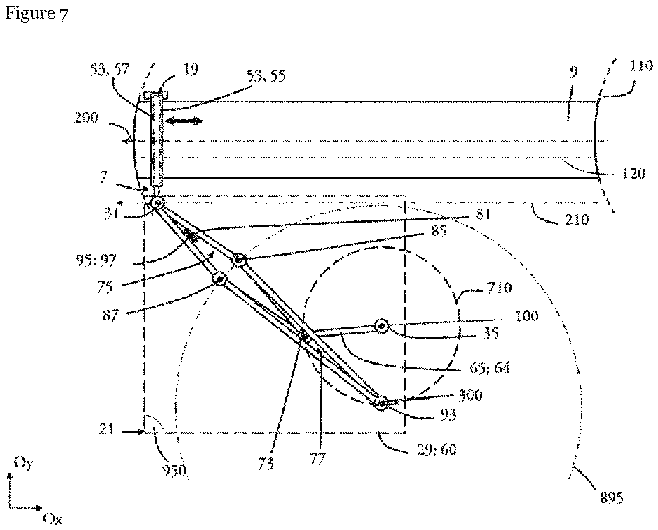

Les figures 5 à 7 détaillent, pour un premier mode de réalisation, le déplacement du balai d'essuyage 19 entre la première position extrême, visible à la figure 5, et la deuxième position extrême, visible à la figure 7, dans lesquelles le balai est disposée sensiblement au voisinage des bords latéraux 41 de la surface optique 9. Dans cet exemple de réalisation, le balai d'essuyage 19 est ainsi déplacé sur la dimension longitudinale 160 de la surface optique 9 et le dispositif de transformation 29 est disposé en regard du bord inférieur 39 de la surface optique 9. Alternativement, il pourra être aménagé en regard du bord supérieur 37.

Lorsque le moteur d'entraînement 27 fonctionne, la deuxième terminaison 71 de la première bielle 65 ainsi que le premier pivot 73 du premier quadrilatère 75 de bielles 64 sont entraînés le long de la trajectoire en arc de cercle, sur le premier cercle 710. Ce déplacement de la première bielle 65 tend à déplacer le deuxième pivot 85 et le troisième pivot 87, reliés au premier pivot 73 respectivement par l'intermédiaire de la deuxième bielle 67 et la troisième bielle 79. Tel que précisé précédemment, ces deuxième et troisième pivots sont amenés à se déplacer le long du deuxième cercle 895 du fait de la liaison entre ces pivots et le point fixe 93 commun de la sixième bielle 89 et la septième bielle 91, elles aussi entraînées par le déplacement des deuxième et troisième pivots.

Un tel système de bielles 60, combiné au guidage en translation du balai d'essuyage de part et d'autre, ou au moins le long d'un côté, de la surface vitrée, permet d'assurer la transformation de la trajectoire circulaire définie par le premier cercle 710 en une trajectoire linéaire de l'organe de liaison articulé 31 le long d'un axe primaire 210, parallèle à l'axe de translation du balai d'essuyage 19, ce balai d'essuyage étant porté par l'organe de liaison articulé 31 par l'intermédiaire du connecteur 33 pouvant prendre la forme d'un bras rigide.

Le déplacement du balai d'essuyage 19 entre la première position extrême et la deuxième position extrême est caractérisé par la déformation graduelle du premier quadrilatère 75 et du deuxième quadrilatère 77 de bielles 64.

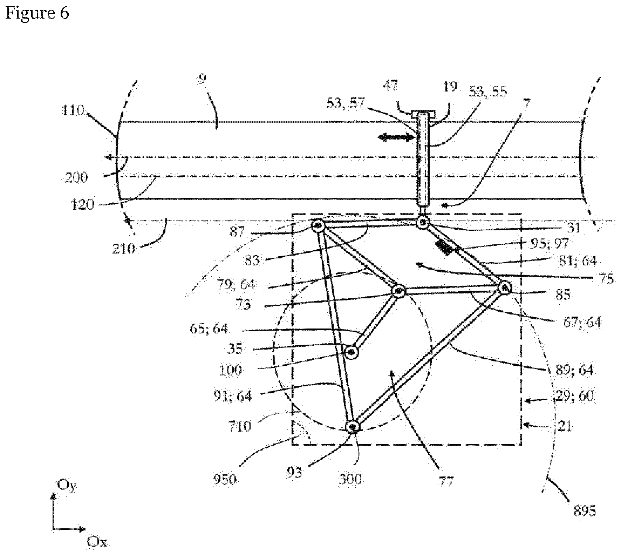

Par exemple, lorsque le balai d'essuyage 19 est déplacé depuis la première position extrême, telle qu'illustrée à la figure 5, vers une position intermédiaire quelconque dont un exemple est illustré à la figure 6, comprise entre la première position extrême et la deuxième position extrême, le premier quadrilatère 75 et le deuxième quadrilatère 77 changent de forme dans la mesure où le deuxième pivot 85 et le troisième pivot 87 s'éloignent graduellement. Il en résulte pour le premier quadrilatère 75 un rapprochement entre l'organe de liaison articulé 31 et le premier pivot 73 et pour le deuxième quadrilatère 77 un rapprochement entre cet organe de liaison articulé 31 et le point fixe 93.

Lorsque le balai d'essuyage 19 est déplacé depuis la position intermédiaire sur la figure 6 jusqu'à la deuxième position extrême, telle qu'illustrée à la figure 7, l'organe de liaison articulé 31 et le premier pivot 73 vont graduellement continuer à se rapprocher, jusqu'à ce que le point fixe 93, le point d'articulation moteur fixe 35, le premier pivot 73 et l'organe de liaison articulé 31 soient alignés, avant de s'éloigner à nouveau jusqu'à ce que le balai d'essuyage atteigne cette deuxième position extrême. Le moteur d'entraînement 27 est ensuite actionné en sens inverse pour que le système à bielles soit déplacé de manière inverse au déplacement précédent pour revenir dans la première position extrême.

Avantageusement, lorsque le système d'essuyage est configuré pour projeter un fluide de nettoyage sur la surface optique 9, comportant au moins le conduit 55, schématiquement représenté en pointillés, et la pluralité de buses 57 formant le dispositif de projection 53, le dispositif de transformation 29 peut être équipé d'un organe de contrôle 95 desdits dispositifs d'alimentation et de projection 53 régulant la circulation et la projection du fluide de nettoyage.

L'organe de contrôle 95 peut notamment comporter un contacteur 97 relié à une vanne de contrôle d'alimentation de fluide de nettoyage. A titre d'exemple, le contacteur 97 peut être porté par la quatrième bielle 81 de sorte que, lorsque le deuxième pivot 85 et le troisième pivot 87 sont rapprochés au niveau de la première position extrême, la cinquième bielle 83 entre en contact avec le contacteur 97 porté par la quatrième bielle 81, permettant un contact électrique et l'envoi d'une instruction pour l'ouverture de la vanne précédemment évoquée, de manière à permettre la circulation du fluide de nettoyage. Le fluide de nettoyage est alors distribué dans le système de nettoyage 7 et projeté vers la surface optique 9 tout au long du déplacement du balai d'essuyage 19, depuis la première position extrême jusqu'à la deuxième position extrême.

Lorsque le deuxième pivot 85 et le troisième pivot 87 sont à nouveau rapprochés, lorsque le balai est dans la deuxième position extrême, la cinquième bielle 83 entre à nouveau en contact avec le contacteur 97, permettant un contact électrique et l'envoi d'une instruction pour la fermeture de la vanne précédemment évoquée, de manière à interrompre la circulation du fluide de nettoyage. Dès lors aucun fluide n'est projeté sur la surface optique 9 au fil du déplacement du balai d'essuyage 19 depuis la deuxième position extrême vers la première position extrême.

Dans un tel contexte, les buses 57 de projection du fluide de nettoyage sont tournées vers la deuxième position extrême, de sorte que la surface optique 9 soit d'abord humidifiée par le fluide de nettoyage puis balayée par la lame 23 du balai d'essuyage 19. On pourrait prévoir sans sortir du contexte de l'invention que l'orientation des buses, et la position extrême dans laquelle l'ouverture ou la fermeture de la vanne est déclenchée, soient modifiées.

Une autre alternative pourrait consister en une modification de l'emplacement du contacteur 97, par exemple entre la deuxième bielle 67 et la troisième bielle 79, ou entre la sixième bielle 89 et la septième bielle 91.

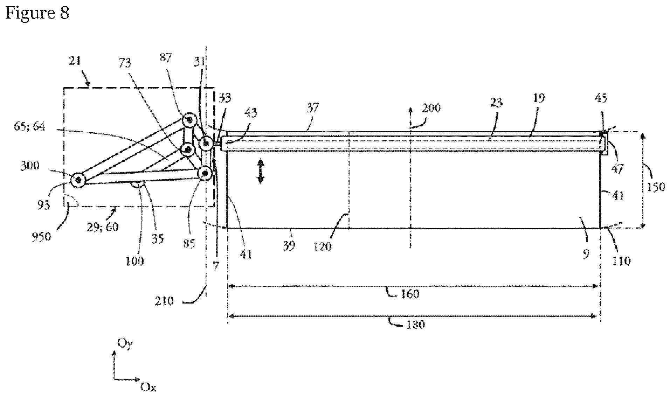

La figure 8 illustre un exemple alternatif permettant avantageusement de réduire l'amplitude du déplacement du balai d'essuyage 19 et donc la durée de l'opération de nettoyage de la surface du capteur, et permettant en outre de rendre compact le système à bielles 60. Dans un tel système de nettoyage 7, le balai d'essuyage 19 s'étend parallèlement à la dimension longitudinale 160 de la surface optique 9, c'est-à-dire entre les bords latéraux 41, et le balai d'essuyage 19 est déplacé selon une translation dans la direction transversale entre la première position extrême et la deuxième position extrême, respectivement aménagées aux abords du bord supérieur 37 et du bord inférieur 39 de la surface optique 9.

Il est à noter que, tel que précédemment exposé, un tel mode de réalisation de la présente invention ne peut être mis en oeuvre que si le déplacement du balai d'essuyage 19 se fait le long de l'axe de translation 200, parallèlement à la génératrice 120 de la surface optique 9. La surface optique 9 représentée dans la figure 8 présente ainsi une courbure présentant une orientation différente de celle précédemment décrite dans les figures 5 à 7, la courbure étant agencée autour d'n axe transversal. En d'autres termes, si la position du dispositif d'entraînement 21, et notamment la position du dispositif de transformation 29, peut être modifiée, il est essentiel, pour le fonctionnement optimal de la présente invention, que le balai d'essuyage 19 s'étende perpendiculairement à la génératrice 120 et qu'il soit déplacé le long de l'axe de translation 200, selon un mouvement sensiblement parallèle à ladite génératrice 120. En revanche, de telles contraintes n'ont pas lieu d'être lorsque la surface optique 9 est plane.

L'exemple de réalisation illustré à la figure 8 se distingue ainsi de celui des figures 5 à 7 en ce que le balai d'essuyage 19 présente une dimension plus importante, la lame présentant ainsi une longueur 180 supérieure à la dimension longitudinale 160 d'environ 300 à 400 mm de la surface optique 9, et en ce que le dispositif de transformation 29 est aménagé en regard de l'un des bords latéraux 41de la surface optique 9.

Le principe du déplacement du balai d'essuyage 19 et la variation des positions des différentes bielles 64 du dispositif de transformation 29 entre la première position extrême et la deuxième position extrême est ainsi identique à celui précédemment exposé à la différence que le dispositif de transformation 29 est aménagé en regard de l'un des bords latéraux 41 et que l'organe de liaison articulé 31 est déplacée le long de l'axe primaire 210 qui s'étend ici le long dudit bord latéral 41, sensiblement parallèlement à la direction transversale.

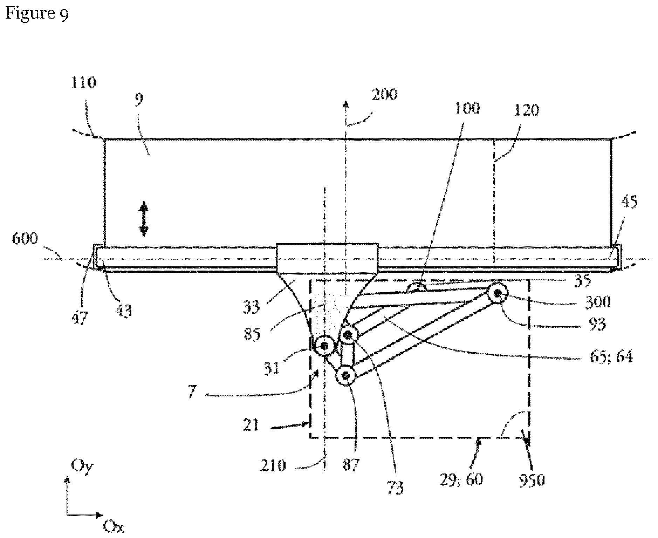

La dimension transversale 150 de la surface optique 9 étant inférieure à sa dimension longitudinale 160, la distance parcourue par le balai d'essuyage 19 entre la première position extrême, par exemple aux abords du bord supérieur 37, et la deuxième position extrême, par exemple aux abords du bord inférieur 39, est plus réduite. Il en résulte une réduction du temps de l'opération de nettoyage mais également une réduction de l'encombrement induit par le dispositif d'entraînement 21. En effet, le déplacement du balai d'essuyage 19 présentant une amplitude plus réduite, l'échelle du dispositif de transformation 29 de type « dispositif de Peaucellier-Lipkin » est elle-même réduite, les caractéristiques concernant l'agencement relatif des différents quadrilatères demeurant néanmoins similaires à ce qui a été précédemment décrit. Dans l'exemple illustré à la figure 8, le connecteur 33 s'étend entre l'organe de liaison articulé 31 et la première extrémité axiale 43. Alternativement, et tel qu'illustré à la figure 9 ou tel que précédemment exposé à la figure 4, le connecteur 33 peut être centré sur la dimension la plus longue du balai d'essuyage 19, entre la première extrémité axiale 43 et la deuxième extrémité axiale 45. Une telle configuration contribue à renforcer la stabilité du balai d'essuyage 19 et à limiter le désaxement de la droite d'extension 600 du balai d'essuyage 19 par rapport à la perpendiculaire à l'axe de translation 200. Tel que précédemment évoqué pour le mode de réalisation illustré à la figure 4, le balai d'essuyage 19 comprend alors, de préférence l'organe de guidage 47 à chacune de ses extrémités axiales 43, 45 et le dispositif de transformation 29 est aménagé au niveau du bord inférieur 39 ou du bord supérieur 37.

Il est à noter, tel que précédemment évoqué, que l'ensemble des exemples et mode de réalisation décrits ci-dessus représentent, à des fins de clarté, le dispositif de transformation 29 lorsqu'il s'étend conformément à la figure 3, sensiblement parallèlement à la surface vitrée à nettoyer. Néanmoins, les exemples représentés aux figures 5 à 9, ainsi que toute alternative ou combinaison exposée qui leur est associée, peuvent être adaptés pour que le dispositif de transformation 29, s'étende sensiblement perpendiculairement à la surface vitrée.

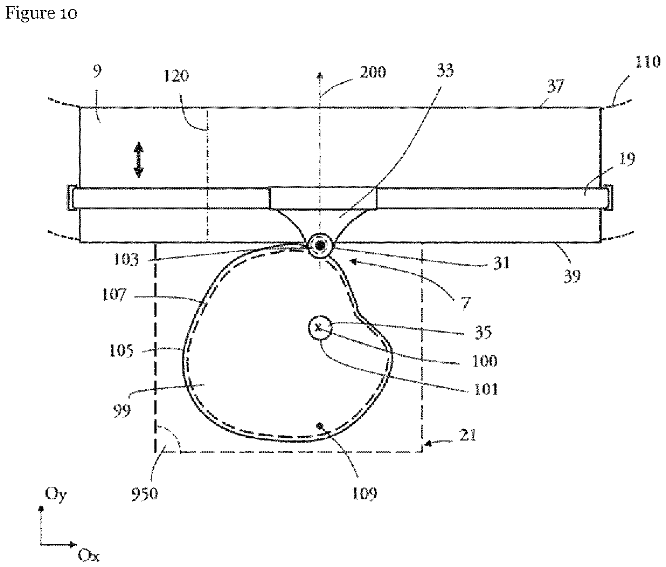

La figure 10 illustre un exemple, dans lequel le dispositif de transformation 29 comprend au moins une came 99. La came 99 est rendue solidaire en rotation d'un arbre de sortie du moteur d'entraînement 27, de manière à pouvoir pivoter autour de l'axe de rotation 100 sensiblement perpendiculaire à la surface vitrée et à sa génératrice 120. La came présente un orifice 101 emmanché autour de l'arbre de sortie, et cette liaison est configurée pour former le point d'articulation moteur fixe 35.

Le connecteur 33 assurant la connexion entre le balai d'essuyage 19 et le dispositif de transformation 29 comprend un pion 103 configuré pour se déplacer le long d'une bordure périphérique 105 de la came 99. Ledit pion 103 s'étend en direction de la came 99, par exemple parallèlement à l'axe de rotation 100 du moteur d'entraînement 27.

Alternativement, le connecteur 33 et la came 99 peuvent être configurés pour que le pion 103 puisse circuler le long d'un sillon 107, représenté en ligne pointillée, compris dans la came 99.

Afin d'assurer le déplacement du balai d'essuyage 19 entre la première position extrême et la deuxième position extrême, c'est-à-dire sur la dimension transversale 150 de la surface optique 9, le long de l'axe de translation 200, la came 99 présente une structure asymétrique et l'orifice 101, traversé par l'axe de rotation 100 du moteur d'entraînement 27, est excentré.

Un tel dispositif de transformation 29, comprenant la came 99, est mis en oeuvre pour assurer le balayage de la surface optique 9 le long de sa dimension transversale 150, et non de sa dimension longitudinale 160 tel que précédemment évoqué pour les figures 5 à 7, afin de conserver des dimensions acceptables de la came 99 et de limiter l'encombrement du système de nettoyage 7.

Dans l'exemple illustré, la came 99 présente une structure plane dont une surface principale 109 est essentiellement comprise dans le plan principal 950, lequel s'étend sensiblement parallèlement à la surface vitrée à nettoyer.

Afin de limiter l'encombrement du champ de vision du capteur optique 5 lors du pivotement de la came 99, on pourra envisager une alternative dans laquelle le dispositif de transformation 29 comprend une combinaison de la came 99 et du système de bielles 60, au moins une bielle 64 étant raccordée au connecteur 33 et/ou comprenant le pion 103 configuré pour coopérer avec la came 99. De la sorte, lors du déplacement du balai d'essuyage entre la première position extrême et la deuxième position extrême, respectivement aux abords du bord inférieur 39 et du bord supérieur 37 de la surface optique 9, la came 99 n'est pas interposée entre la surface optique 9 et l'environnement extérieur au véhicule automobile.

Avantageusement, le dispositif de transformation 29 comprenant la came 99 pourra être aménagé pour assurer la circulation et la projection du fluide de nettoyage, le balai d'essuyage 19 comprenant, tel que précédemment exposé, le dispositif d'alimentation et/ou le dispositif de distribution. A titre d'exemple, le connecteur 33 peut être équipé du contacteur et la came d'un organe d'activation émergeant de la surface principale 109 et s'étendant en saillie de la came 99, vers le connecteur 33.

On comprend à la lecture de ce qui précède que la présente invention propose un système de nettoyage destiné au balayage d'une surface vitrée, la surface vitrée consistant en une surface de détection d'un capteur/émetteur. Le système de nettoyage comprend un balai d'essuyage et un dispositif d'entraînement composé d'un moteur d'entraînement en rotation et d'un dispositif de transformation du mouvement de rotation du moteur en un mouvement rectiligne, le dispositif entraînant le balai d'essuyage selon un mouvement rectiligne le long de la surface optique. Également, l'invention concerne un ensemble de détection comprenant ledit système de nettoyage et le capteur/émetteur, la surface vitrée du capteur/émetteur pouvant être plane ou galbée. Le système de nettoyage selon la présente invention permet avantageusement l'utilisation de moteur d'entraînement en rotation classiquement utilisé pour le nettoyage de surface vitrées de type pare-brise.

L'invention ne saurait toutefois se limiter aux moyens et configurations décrits et illustrés ici, et elle s'étend également à tout moyen ou configuration équivalents et à toute combinaison technique opérant de tels moyens. En particulier, l'emplacement du connecteur, du dispositif de transformation ou de l'organe de guidage pourront être modifiés sans nuire à l'invention, dans la mesure où le système de nettoyage, in fine, remplit les mêmes fonctionnalités que celles décrites dans ce document.

## Revendications

1. Système de nettoyage (7) d'une surface vitrée d'un véhicule automobile (1) comprenant au moins un balai d'essuyage (19) et un dispositif d'entraînement (21) d'au moins le balai d'essuyage (19) le long d'un axe de translation (200), sensiblement perpendiculaire audit balai d'essuyage (19), la surface vitrée étant une surface de détection (9) d'un capteur/émetteur (5) d'un ensemble de détection et le dispositif d'entraînement (21) comprenant au moins un moteur d'entraînement (27) en rotation autour d'un axe de rotation (100) sensiblement perpendiculaire à l'axe de translation (200) et au moins un dispositif de transformation (29) du mouvement de rotation du moteur d'entraînement (27) en un mouvement rectiligne le long de l'axe de translation (200), le dispositif de transformation (29) comportant d'une part un organe de liaison articulé (31) sur lequel est fixé le balai d'essuyage, par l'intermédiaire d'au moins un connecteur (33), et d'autre part un point d'articulation moteur fixe (35) solidaire en rotation d'un arbre de sortie du moteur d'entraînement (21), le dispositif de transformation (29) comprenant au moins un système de bielles (60) et éventuellement une came (99), et le système de bielles (60) comprenant au moins une première bielle (65), rapportée sur le moteur d'entraînement (27) pour former le point d'articulation moteur fixe (35), **caractérisé en ce qu'**il comprend au moins deux quadrilatères (75, 77) de bielles (64) articulés, respectivement un premier quadrilatère de bielles (75) et un deuxième quadrilatère (77) de bielles (64), au moins l'organe de liaison articulé (31) étant commun au premier quadrilatère (75) et au deuxième quadrilatère (77), et **en ce que** le deuxième quadrilatère (77) comprend un point fixe (93) du dispositif de transformation (29).

2. Système de nettoyage (7) selon la revendication 1, dans lequel au moins une extrémité axiale (43, 45) du balai d'essuyage (19) comprend au moins un organe de guidage (47) du balai d'essuyage (19) le long de l'axe de translation (200).

3. Système de nettoyage (7) selon l'une quelconques des revendications précédentes, dans lequel le connecteur (33) est disposé au niveau d'une première extrémité axiale (43) du balai d'essuyage (19), le au moins un organe de guidage (47) étant disposé au niveau d'une deuxième extrémité axiale (45), opposée à la première extrémité axiale (43), dudit balai d'essuyage (19).

4. Système de nettoyage (7) selon la revendication 1 et la revendication 2, dans lequel le connecteur (33) est centré sur le balai d'essuyage (19).

5. Ensemble de détection (3) pour véhicule automobile (1) comprenant au moins un capteur/émetteur (5), comportant au moins la surface vitrée (9), et au moins le système de nettoyage (7) selon l'une quelconque des revendications précédentes.

6. Ensemble de détection (3) selon la revendication 5, dans lequel une dimension principale d'une lame (23) du balai d'essuyage (19) est sensiblement égale à l'une des dimensions, longitudinale ou transversale de la surface vitrée à nettoyer (9).

7. Ensemble de détection (3) selon la revendication 5 ou 6, dans lequel la surface vitrée à nettoyer (9) est galbée, la surface vitrée (9) étant définie par au moins une directrice (110) et une génératrice (120), l'axe de translation (200) du balai d'essuyage (19) s'étendant parallèlement à au moins la génératrice (120) de la surface vitrée (9) du capteur/émetteur (5).

## Patentansprüche

1. Reinigungssystem (7) zum Reinigen einer verglasten Fläche eines Kraftfahrzeugs (1), umfassend mindestens ein Wischerblatt (19) und eine Antriebsvorrichtung (21) zum Antreiben mindestens des Wischerblatts (19) entlang einer Translationsachse (200), die im Wesentlichen senkrecht zu dem Wischerblatt (19) verläuft, wobei die verglaste Fläche eine Detektionsfläche (9) eines Sensors/Senders (5) einer Detektionsanordnung ist und wobei die Antriebsvorrichtung (21) mindestens ein Antriebsmotor (27), der um eine Rotationsachse (100) rotiert, die im Wesentlichen senkrecht zu der Translationsachse (200) verläuft, und mindestens eine Umwandlungsvorrichtung (29) zur Umwandlung der Rotationsbewegung des Antriebsmotors (27) in eine geradlinige Bewegung entlang der Translationsachse (200) umfasst, wobei die Umwandlungsvorrichtung (29) zum einen ein angelenktes Verbindungselement (31), an dem, über mindestens einen Verbinder (33), das Wischerblatt befestigt ist, und zum anderen einen ortsfesten Motorgelenkpunkt (35), der drehfest mit einer Abtriebswelle des Antriebsmotors (21) ist, aufweist, wobei die Umwandlungsvorrichtung (29) mindestens ein Stangensystem (60) und gegebenenfalls einen Nocken (99) umfasst und wobei das Stangensystem (6o) mindestens eine erste Stange (65) umfasst, die an den Antriebsmotor (27) angesetzt ist, um den ortsfesten Motorgelenkpunkt (35) zu bilden, **dadurch gekennzeichnet, dass** es mindestens zwei Vierecke (75, 77) aus angelenkten Stangen (64) umfasst, und zwar ein erstes Viereck aus Stangen (75) und ein zweites Viereck (77) aus Stangen (64), wobei mindestens das angelenkte Verbindungselement (31) dem ersten Viereck (75) und dem zweiten Viereck (77) gemeinsam ist, und dass das zweite Viereck (77) einen Fixpunkt (93) der Umwandlungsvorrichtung (29) umfasst.

2. Reinigungssystem (7) nach Anspruch 1, wobei mindestens ein axiales Ende (43, 45) des Wischerblatts (19) mindestens ein Führungselement (47) zum Führen des Wischerblatts (19) entlang der Translationsachse (200) umfasst.

3. Reinigungssystem (7) nach einem der vorhergehenden Ansprüche, wobei der Verbinder (33) an einem ersten axialen Ende (43) des Wischerblatts (19) angeordnet ist, wobei das mindestens eine Führungselement (47) an einem zweiten axialen Ende (45), das zu dem ersten axialen Ende (43) entgegengesetzt ist, des Wischerblatts (19) angeordnet ist.

4. Reinigungssystem (7) nach Anspruch 1 und Anspruch 2, wobei der Verbinder (33) auf das Wischerblatt (19) zentriert ist.

5. Detektionsanordnung (3) für ein Kraftfahrzeug (1), umfassend mindestens einen Sensor/Sender (5), aufweisend mindestens die verglaste Fläche (9) und mindestens das Reinigungssystem (7) nach einem der vorhergehenden Ansprüche.

6. Detektionsanordnung (3) nach Anspruch 5, wobei eine Hauptabmessung einer Leiste (23) des Wischerblatts (19) im Wesentlichen gleich einer der Abmessungen, längs oder quer, der zu reinigenden verglasten Fläche (9) ist.

7. Detektionsanordnung (3) nach Anspruch 5 oder 6, wobei die zu reinigende verglaste Fläche (9) gewölbt ist, wobei die verglaste Fläche (9) durch mindestens eine Leitlinie (110) und eine Erzeugende (120) definiert ist, wobei sich die Translationsachse (200) des Wischerblatts (19) parallel zu mindestens der Erzeugenden (120) der verglasten Fläche (9) des Sensors/Senders (5) erstreckt.

## Claims

1. A cleaning system (7) for cleaning a glazed surface of a motor vehicle (1), comprising at least one wiper (19) and a drive device (21) for driving at least the wiper (19) along an axis of translation (200) substantially perpendicular to said wiper (19), the glazed surface being a detection surface (9) of a sensor/transmitter (5) of a detection assembly and the drive device (21) comprising at least one drive motor (27) for driving in rotation about an axis of rotation (100) substantially perpendicular to the axis of translation (200), and at least one conversion device (29) for converting the rotary movement of the drive motor (27) into a rectilinear movement along the axis of translation (200), the conversion device (29) comprising , on the one hand, an articulated connecting member (31) to which the wiper is attached, by means of at least one connector (33), and on the other hand, a fixed motor articulation point (35) rotationally rigidly secured to an output shaft of the drive motor (21), the conversion device (29) comprising at least a connecting rod system (60) and eventually (99), and the connecting rod system (60) comprising at least a first connecting rod (65), attached to the drive motor (27) to form the fixed motor articulation point (35) **characterized in that** at least two articulated quadrilaterals (75, 77) of connecting rods (64), respectively a first quadrilateral of connecting rods (75) and a second quadrilateral (77) of connecting rods (64), at least the articulated connecting member (31) being common to the first quadrilateral (75) and to the second quadrilateral (77), **in that** the second quadrilateral (77) comprises a fixed point (93) of the conversion device (29).

2. The cleaning system (7) as claimed in claim 1, wherein at least one axial end (43, 45) of the wiper (19) comprises at least one guide member (47) for guiding the wiper (19) along the axis of translation (200).

3. The cleaning system (7) as claimed in any one of the preceding claims, wherein the connector (33) is arranged at a first axial end (43) of the wiper (19), the at least one guide member (47) being arranged at a second axial end (45), opposite the first axial end (43), of said wiper (19).

4. The cleaning system (7) as claimed in claim 1 and claim 2, wherein the connector (33) is centered on the wiper (19).

5. A detection assembly (3) for a motor vehicle (1) comprising at least one sensor/transmitter (5), comprising at least the glazed surface (9), and at least the cleaning system (7) as claimed in any one of the preceding claims.

6. The detection assembly (3) as claimed in claim 5, wherein a main dimension of a blade (23) of the wiper (19) is substantially equal to one of the dimensions, longitudinal or transverse, of the glazed surface to be cleaned (9).

7. The detection assembly (3) as claimed in claim 5 or 6, wherein the glazed surface (9) to be cleaned is curved, the glazed surface (9) being defined by at least a directrix (110) and a generatrix (120), the axis of translation (200) of the wiper (19) extending parallel to at least the generatrix (120) of the glazed surface (9) of the sensor/transmitter (5).
